# EUROPEAN PATENT APPLICATION

(11) **EP 1 666 740 A2**
(43) Date of publication of application: **07.06.2006**
(21) Application number: 05111548.3
(22) Date of filing: 01.12.2005
(51) Int. Cl.: F16B 19/10

(54) **Blind rivet**

(30) Priority: 03.12.2004 GB 0426578
(71) Applicant: Newfrey LLC, Newark, Delaware 19711 (US)
(72) Inventor: Hull, Darren, DY5 2XQ, Brierly Hill (GB); Godwin, Stephen, B43 5LG, Great Barr (GB)
(74) Representative: Schwarz-Haar, Gabriele

(57) **Abstract**

A rivet 20 for attachment to one or more components 15, 16 by insertion through a predefmed hole 14 in the one or more components. The rivet comprises a mandrel 1 and a body 2. The mandrel 1 has a head 3, a splined portion 5 adjacent the head 3 for engaging the one or more components 15, 16 an externally threaded portion 7 adjacent the splined portion 5, and a stem portion 8 connected to the threaded portion 7 by a frangible zone. The hollow body 2 is made of ductile material and has a flange 13 for contacting the one or more components on a side opposite to that contacted by the head 3 of the mandrel 1. The body 2 has a bore that is dimensioned so as to be capable, in use, of sliding over the outside of the threaded portion 5 of the mandrel 1 to bring the flange 13 into contact with the one or more components, and capable of being swaged onto the treaded portion 5 thereby to secure the body 2 to the threaded portion 5 during setting of the rivet.

## Description

This invention relates to blind rivets and in particular to blind rivets for forming an electrical connection to a metal component.

It has long been recognised that blind rivets make a considerable contribution to reducing the cost of a component or assembly through increased assembly speed and of the low cost of the rivet itself. For instance, without the benefit of blind rivets assemblies would have to be bolted together and there would be an attendant increase in assembly time would result. Also where the weight of an assembly is to be a minimum then using fasteners such as nuts and bolts would increase weight and design complexity compared with the use of blind rivet technology. Furthermore it is known that the simplicity and low cost blind rivet techniques afford are more cost effective compared with other means of assembly such as welding or self-piercing riveting require the use of specialist equipment that is expensive and inappropriate where very thin materials are being used.

However, recent European legislation evolving from environmental concerns is beginning to have an impact on everyday assemblies where permanent, high speed fixing afforded by blind rivets is being questioned. British Building Regulations 2000 (SI200/2531), CE Marking, COSH Regulations and Safety at Work Acts are some of the formal requirements that apply pressure on the designers, especially of florescent lighting devices, to incorporate simple means of dismantling without compromising the cost of the assembly. Domestic and industrial lighting industries perceive the need to recycle high percentages of components and materials as well as making more energy efficient appliances.

The continued use of blind rivets to secure components that need to be removed and recycled due to the high material cost or potential damage on the environment will ultimately create extra cost due to increased design complexity as an alternative to a permanent fixing. It could be envisaged that costly three piece nut, screw and shake-proof washer would be the only likely alternative, but with a higher in-place cost penalty.

There is therefore, a need to provide a good electrical connection to metal components that is both relatively cheap and reliable and can easily be dismantled.

An object of the present invention is to provide a rivet for attachment to a component that has splines that improve electrical contact between the rivet and one or more metal components and is easy to remove.

According to the present invention there is provided a rivet for attachment to one or more components by insertion through a predefmed hole in the one or more components, the rivet comprising:
(a) a mandrel having a head, a splined portion adjacent the head for engaging the component, an externally threaded portion adjacent the splined portion, and a stem portion connected to the threaded portion by a frangible zone, and
(b) a hollow body of ductile material having a flange for contacting the component on a side opposite to that contacted by the head of the mandrel, a bore that is dimensioned so as to be capable, in use, of sliding over the outside of the threaded portion of the mandrel to bring the flange into contact with the component and capable of being swaged onto the external thread of the threaded portion thereby to secure the body to the threaded portion during setting of the rivet.

Preferably the head of the mandrel is a countersunk head for location in a complementary shaped recess in the predefined hole in component and the head has a recess for receiving a complementary shaped tool.

The head may comprise a multi-facetted body for location in a complementary shaped recess in the predefined hole in the component. In this case the head may be of hexagonal shape. The head may be of a domed shape and have a recess in the convex surface of the dome for receiving a complementary shaped tool.

Preferably the stem has a grooved outer surface.

According to a further aspect of the present invention there is provided a method of securing a rivet to a component comprising the steps of
(c) providing a rivet constructed in accordance with any one of the attached claims 1 to 6;
(d) providing one or more components with a predefined hole in which the rivet is to be inserted,
(e) inserting the rivet into the predefined hole of the component so as to bring the splined portion of the mandrel into contact with the one or more components on one side of the one or more components;
(f) sliding the body over the threaded portion of the mandrel so as to bring the flange into contact with the component on a side of the component remote from that contacted by the splined portion,
(g) placing a tool onto the stem of the mandrel so as to grip the mandrel, and
(h) setting the rivet by operating the tool to pull the head of the mandrel towards the component until the frangible zone breaks whilst pushing the flange against the one or more components on a side of the one or more components remote from the head of the rivet and thereby force the splined portion into the predefined hole and cause the rivet to set by swaging the body onto the threaded portion of the mandrel.

Preferably the swaging of the body to the external thread is achieved by pushing a nose piece that has a shaped internal profile, (preferably hexagon shaped), over the body so that the nose piece profile is formed on the outer surface of the body during the swaging step.

A first and a second component may be provided each having an aligned predefined hole, the hole in the first component being of larger diameter than that in the second component, and the step of setting the rivet causes the head of the mandrel to deform the second component into the hole of the first component.

The rivet may be subsequently removed from the one or more components by unscrewing the swaged body from the threaded portion of the mandrel using a suitable tool.

The present invention will now be described by way of example with reference to the accompanying drawings in which;
Figure 1 is an end view of a body of a rivet constructed in accordance with the present invention;
Figure 2 is a side view of the body that is used in conjunction with the mandrel of Figure 4;
Figure 3 is an end view of a mandrel of a rivet constructed in accordance with the present invention;
Figure 4 is a side view of the mandrel shown in Figure 3;
Figure 5 is an end view of the mandrel of Figures 3, and 4 looking at the head of the mandrel;
Figure 6 is a cross sectional view taken along line 6-6 of Figure 4;
Figure 7 is a cross sectional view of a rivet constructed in accordance with the present invention and shows the rivet after it has been set and attached to a component and a hexagon shape generated on the swaged body; and,
Figures 8 to 11 show schematically the method of setting the rivet of Figures 1 to 7.

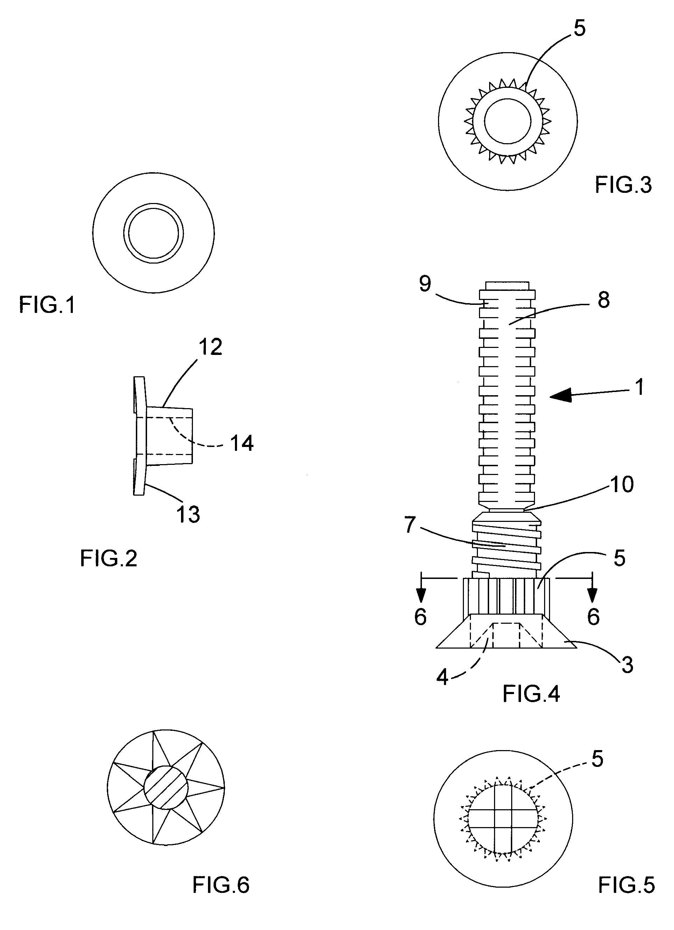

Referring to Figures 1 to 6 the rivet 20 comprises a mandrel 1 and a hollow body 2. The mandrel 1 is best seen in Figures 3 to 6 and has a head 3 that is of a countersunk shape and has a recess 4 for receiving a tool (not shown) such as a screwdriver, Allen key, or a similar tool. The recess is of a shape complementary to that of the tool. For example, the recess 4 could be a slot to receive a flat bladed screwdriver, or a cross - head slot (such as a Pozidrive (Trade Mark) or a Phillips (Trade Mark) screwdriver.

Although the head 3 of the mandrel is shown as being countersunk form (i.e. it has a conical profile) it is to be understood that it could be of any desired shape, such as for example, a dome shape, a cylindrical shape, an elliptical shape or a multi facetted body (e.g. hexagonal, polygonal, or the like).

The mandrel 1 further comprises a splined portion 5 immediately adjacent the head 3, a threaded portion 7 immediately adjacent the splined portion 5 and a stem 8 having external grooves 9 to provide a gripping surface for a setting tool to grip as will be explained hereinafter. The grooves could be axially spaced grooves as shown or a helical screw thread groove (not shown).

The stem 8 is connected to the threaded portion 7 by a frangible region 10 that is designed to break at a predetermined load during setting of the rivet 20.

Referring to Figures 1 and 2 the body 2 is a hollow body made of a ductile metal and has a shank 12 and a flange 13. The bore 14 of the body 2 is dimensioned so that it can be slid over the outside diameter of the threaded portion 7 of the mandrel. The body 2 has a ductility that allows the shank 12 to be swaged onto the threaded portion 7 of the mandrel 1, as will be explained hereinafter.

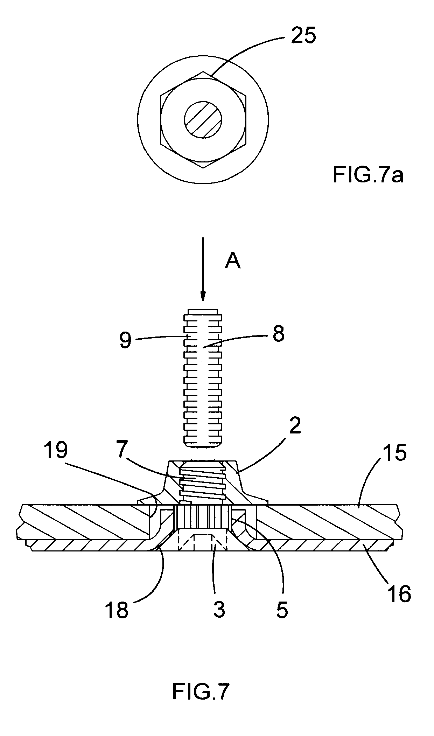

Referring to Figure 7, the mandrel 1 is inserted into a predefined hole 18 in one component 16 to bring the splined portion 5 of the mandrel into contact with the hole 18 of the component 16. In Figure 7 there are two components 15, 16, and one of the components 15 has a larger diameter hole 19 than the other component 16. The component 16 has a slightly smaller diameter hole 18 that overlaps the hole 19 in component 15.

In the case of thick component 16 the hole 18 may be punched or drilled through and may have a countersunk recess that is of complimentary shape to that of the head 3 of the mandrel 1 to accommodate the head 3.

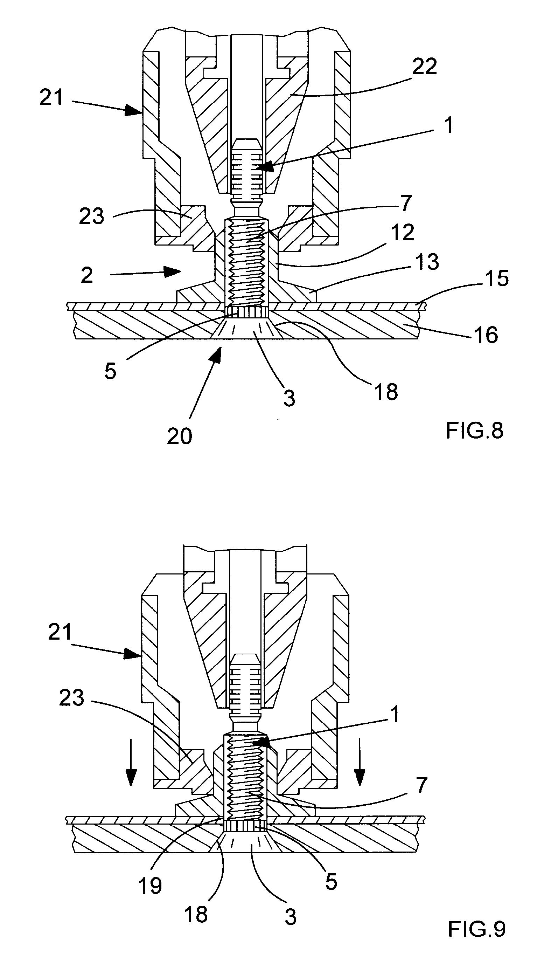

Referring to Figure 8 once the mandrel is inserted into the predefined hole 18 the body 2 is slid over the outside of the threaded portion 7 to bring the flange 13 of the body 2 into contact with a side of the component 15 that is remote from that where the splined portion 5 contacts the component 16. A setting tool 21 is then offered up to the stem 8 so that the jaws 22 of the setting tool 21 grip the stem 8 of the mandrel 1 and the nose 23 of the tool 21 engages the flange 11 of the body.

Operation of the tool 21 to set the rivet 20 causes the nose 22 of the tool to push the flange 13 against the component 15. At the same time the jaws 22 pull the head 3 of the mandrel 1 towards the component 16 to force the splined portion 5 into the hole 18 and bring the head 3 into intimate contact with the component 16. This action causes the head 3 to deform the component 16 into the hole 19 of component 15.

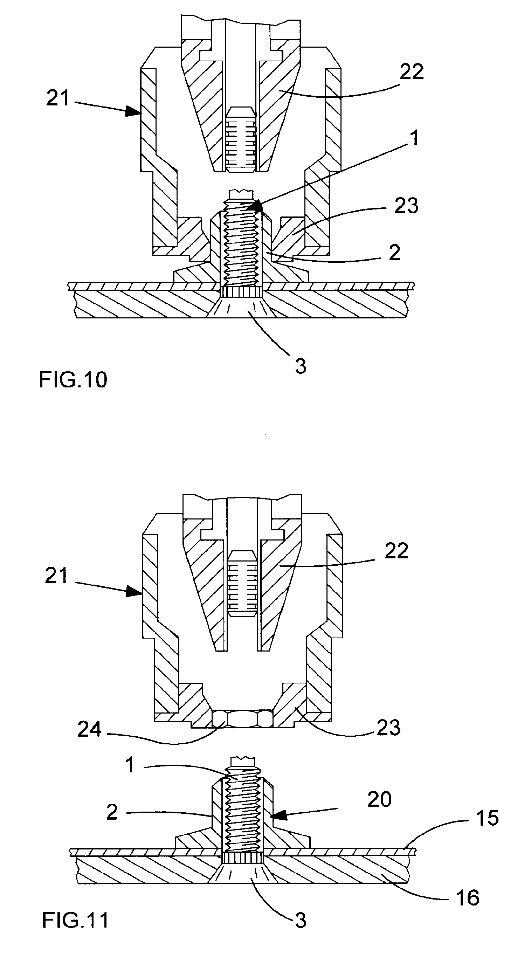

Continued operation of the tool 21 as shown in Figure 9 causes the nose 23 to swage the shank 12 of the body 2 onto the threaded portion 5. The internal bore 24 of the nose piece 23 of the setting tool is for convenience shown in Figure 11 and takes the form of a hexagon or any other polygonal shape. As the shank 12 of the body 2 is swaged, the inner bore 14 of the body 2 is deformed into the threaded portion 7 of the stem 8 so that the body is locked in-place. It follows that the polygonal or hexagon form of the nose piece is impressed in a similar polygonal or hexagon form 25 on the outer surface of the body as shown in Figure 7a.

At a predetermined load, the mandrel 1 breaks at the frangible zone 10 (as shown in Figure 10) and the separate portion of the mandrel is removed leaving the rivet 20 firmly attached to the components 15, 16 (as shown in Figure 11).

If it is required later to remove the rivet 20 from the components 15, 16 in order to recycle the components or to repair the joint a tool such as a screwdriver or Allen key (not shown) is inserted into the recess 4 in the head 3 and the body is unscrewed from the mandrel 1 using a suitable spanner that can easily apply a rotational torque to the body 2, and thus body and mandrel can be discarded or even reused using the same tools.

## Claims

1. A rivet for attachment to one or more components (15, 16) by insertion through a predefmed hole (18, 19) in the one or more components, the rivet comprising:
(a) a mandrel (1) having a head (3), a splined portion (5) adjacent the head for engaging the component (16), an externally threaded portion (7) adjacent the splined portion, and a stem portion connected to the threaded portion (7) by a frangible zone (10), and
(b) a hollow body (2) of ductile material having a flange (13) for contacting the component (15) on a side opposite to that contacted by the head (3) of the mandrel (1), a bore that is dimensioned so as to be capable, in use, of sliding over the outside of the threaded portion (7) of the mandrel (1) to bring the flange (13) into contact with the component (15) and capable of being swaged onto the external thread of the threaded portion (7) thereby to secure the body (2) to the threaded portion (7) during setting of the rivet.

2. A rivet according to Claim 1 wherein the head (3) of the mandrel (1) is a countersunk head for location in a complementary shaped recess in the predefined hole (18) in component (16) and the head has a recess (4) for receiving a complementary shaped tool.

3. A rivet according to Claim 1 wherein the head (3) comprises a multi-facetted body for location in a complementary shaped recess in the predefined hole in the component.

4. A rivet according to Claim 3 wherein the head (3) is of hexagonal shape.

5. A rivet according to Claim 1 wherein the head (3) is of a domed shape and the head has a recess in the convex surface of the dome for receiving a complementary shaped tool.

6. A rivet according to any one of the preceding Claims wherein the stem (8) has a grooved outer surface.

7. A method of securing a rivet to a component comprising the steps of
(a) providing a rivet constructed in accordance with any one of the preceding claims;
(b) providing one or more components (15, 16) with a predefined hole (18, 19) in which the rivet is to be inserted,
(c) inserting the rivet into the predefined hole (18) of the component (15) so as to bring the splined portion (5) of the mandrel (1) into contact with the one or more components on one side of the one or more components;
(d) sliding the body (2) over the threaded portion (7) of the mandrel (1) so as to bring the flange (13) into contact with the component (16) on a side of the component remote from that contacted by the splined portion (5),
(e) placing a tool onto the stem (8) of the mandrel (1)so as to grip the mandrel (1), and
(f) setting the rivet by operating the tool to pull the head (3) of the mandrel (1) towards the component (16) until the frangible zone (10) breaks whilst pushing the flange (13) against the one or more components (15) on a side of the one or more components remote from the head (3) of the rivet and thereby force the splined portion (5) into the predefined hole (18) and cause the rivet to set by swaging the body (2) onto the threaded portion (7) of the mandrel (1).

8. A method according to Claim 7 wherein the step of swaging the body (2) onto the threaded portion (7) is carried out with a tubular tool that has a predetermined cross-sectional shaped bore that impresses the shape of the bore on the outer surface of the body during the swaging step.

9. A method according to Claim 7 wherein the cross sectional shape of the bore and the impressed shape on the outer surface of the body (2) is polygonal shaped so that complimentary tools can be applied to remove the rivet.

10. A method according to claim 9 wherein the polygonal shape is a hexagon.

11. A method according to claim 7 wherein there is a first and a second component (15, 16) each having an aligned predefined hole (18, 19), the hole (19) in the first component (15) being of larger diameter than that in the second component (16), and the step of setting the rivet causes the head (3) of the mandrel (1) to deform the second component (16) into the hole (19) of the first component (15).

12. A method according to any one of claims 7 or 8 wherein the rivet is subsequently removed from the one or more components by unscrewing the threaded portion of the body (2) from the threaded portion (7) of the mandrel (1).
